# EUROPEAN PATENT APPLICATION

(11) **EP 2 045 759 A2**
(43) Date of publication of application: **08.04.2009**
(21) Application number: 08017390.9
(22) Date of filing: 02.10.2008
(51) Int. Cl.: G06K 9/00

(54) **Person authentication apparatus and person authentication method**

(30) Priority: 02.10.2007 JP 2007258878
(71) Applicant: Kabushiki Kaisha Toshiba, Minato-ku, Tokyo 105-8001 (JP)
(72) Inventor: Hasebe, Mitsutake, Tokyo 105-8001 (JP); Sukegawa, Hiroshi, Tokyo 105-8001 (JP)
(74) Representative: HOFFMANN EITLE

(57) **Abstract**

A face authentication apparatus (1A) includes a high tone image acquiring section (101), a tone converting section (103), a face characteristic extracting section (104) and a face collation section (106). The high tone image acquiring section (101) acquires a high tone image containing the face of a walker. The tone converting section (103) converts the acquired high tone image to a low tone image by tone conversion processing which optimizes the brightness of a face area in the high tone image acquired by the high tone image acquiring section (101). The face characteristic extracting section (104) executes an extraction processing for the face characteristic information based on the low tone image whose brightness is optimized by the tone converting section (103). Further, the face collation section (106) executes face collation processing based on the low tone image whose brightness is optimized by the tone converting section (103).

## Description

The present invention relates to a person authentication apparatus and a person authentication method for authenticating a person based on biometric information such as face images taken with a camera.

In a conventional person authentication apparatus for recognizing a walker using his or her face image, images including faces of registered persons are acquired from a camera or sensor and the acquired face images are recorded as registered information (hereinafter referred to as "dictionary"). At the time of authentication, the person authentication apparatus collects face images of walkers through a camera or a sensor so as to obtain similarity between collected face images and a face image as the registered information. If the similarity is equal to or over a predetermined threshold, the person authentication apparatus determines that the walker is a registered person. If the similarity is smaller than the predetermined threshold, the person authentication apparatus determines that the walker is not a registered person (non-registered person).

Often, the camera or sensor for use in the person authentication apparatus is loaded with a technology (for example, center-weighted metering) for automatically adjusting a control parameter such as gain, iris, shutter speed or white balance optimally based on the brightness or color of a central area of a taken image. As such a known technical example, for example, patent documents 1, 2 and 3 referred to below can be mentioned.

Jpn. Pat. Appln. KOKAI Publication No. 11-146405 has disclosed an image signal processing apparatus which detects a flesh color area or face area and uses its detected area as a photometric area so as to carry out a control for taking an optimum image.

Further, Jpn. Pat. Appln. KOKAI Publication No. 2003-107555 has disclosed a photographic apparatus which detects the face area of a person to be photographed and controls an exposure based on the brightness of his or her face area in order to optimize a photograph of a face in the taken image.

Further, Jpn. Pat. Appln. KOKAI Publication No. 2007-148988 has disclosed a technology which detects a change accompanied by a moving action of a walker and excludes images containing the change elements so as to control the brightness of the face area of the walker to an optimum level.

According to each of the above-described known examples, a control for taking a next image is carried out according to a camera parameter which is determined from a taken image. That is, each of the above-described technologies is premised on that the photographing conditions for a taken image and a next taken image are the same. In other words, the technology of each known example needs to estimate a future photographing condition from a photographing condition up to now.

However, because a lighting environment which is one of the photographing conditions contains an artificial factor (for example, lamp on/off), it cannot be always estimated securely from the condition up to now. If such an unpredicted change in the photographing environment occurs, the above-described known examples sometimes fail to acquire a face image in an optimum condition as a face image for use in face authentication.

An object of the present invention is to provide a person authentication apparatus and a person authentication method which enable stable images to be acquired for person authentication so as to achieve a high precision authentication processing.

A person authentication apparatus according to one embodiment of the present invention comprises: an acquiring section which acquires a high tone image including a face of a walking person; a face detecting section which detects a face area of the high tone image acquired by the acquiring section; a tone converting section which converts the high tone image to a low tone image in accordance with the brightness distribution of the face area detected by the face detecting section; a characteristic extracting section which extracts face characteristic information from the face area of the low tone image obtained by the tone converting section; and an authentication section which authenticates whether or not the walking person is a registered person by collating the face characteristic information extracted by the characteristic extracting section with the face characteristic information of the registered person.

A person authentication method according to one embodiment of the present invention authenticates whether or not a walking person is a registered person, the method comprising: acquiring a high tone image including a face of the walking person; detecting a face area of the acquired high tone image; converting the high tone image to a low tone image in accordance with a brightness distribution of the detected face area; extracting face characteristic information from the face area of the low tone image obtained by the tone conversion; and authenticating whether or not the walking person is a registered person by collating the extracted face characteristic information with the face characteristic information of the registered person.

The invention can be more fully understood from the following detailed description when taken in conjunction with the accompanying drawings, in which:
FIG. 1 is a diagram showing an example of the configuration of a face authentication system to which the face authentication apparatus of each embodiment is applied;
FIG. 2 is a diagram showing an example of the configuration of the face authentication apparatus of the first embodiment;
FIG. 3A is a diagram showing an example of a high tone image of 12 bit;
FIG. 3B is a diagram showing an example of a low tone image obtained from the high tone image shown in FIG. 3A;
FIG. 3C is a diagram showing an example of a high tone image obtained by signal amplification processing;
FIG. 3D is a diagram showing an example of a low tone image obtained from the high tone image shown in FIG. 3C;
FIG. 4A is a diagram showing an example of the high tone image;
FIG. 4B is a diagram showing an example of the low tone image obtained from the high tone image shown in FIG. 4A;
FIG. 5 is a diagram showing an example of a function for tone conversion processing which is applied to the tone converting section;
FIG. 6 is a flow chart for explaining a flow of face authentication processing in the face authentication apparatus of the first embodiment;
FIG. 7 is a diagram showing an example of the configuration of the face authentication apparatus of a second embodiment;
FIG. 8 is a diagram showing an example of the configuration of a memory area for memorizing an image column of each walker in a high tone image storage section;
FIG. 9 is a diagram showing an example of the face image column of the walker stored in the high tone image storage section;
FIG. 10 is a flow chart for explaining a flow of the face authentication processing in the face authentication apparatus according to the second embodiment;
FIG. 11 is a diagram showing an example of the configuration of the face authentication apparatus of a third embodiment; and
FIG. 12 is a diagram showing brightness distribution of images including the brightness distribution of the face area and the brightness distribution of the background area.

Hereinafter, preferred embodiments of the present invention will be described with reference to the accompanying drawings.

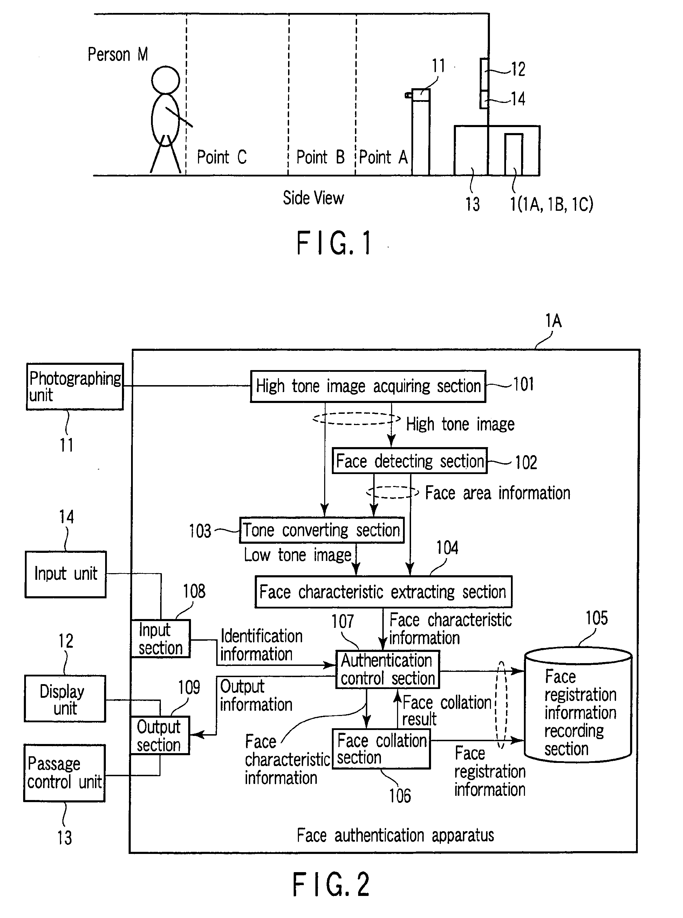

FIG. 1 is a diagram showing an example of operation conditions of the face authentication system to which a face authentication apparatus (person authentication apparatus) 1 (1A, 1B, 1C) of a first, second or third embodiment described later is applied.

In the operation condition shown in FIG. 1, the face authentication system includes a face authentication apparatus 1, a photographing unit 11, a display unit 12, a passage control unit 13 and an input unit 14.

The photographing unit 11 collects high tone image data including a face of a person (M) walking. The photographing unit 11 is a TV camera using such an image pickup device as a CCD sensor. The TV camera for use as the photographing unit 11 includes a high-bit A/D converter (for example, a 12-bit A/D converter). In the meantime, an area in which the face of the walker M is photographed by the aforementioned photographing unit 11 (for example, a range for photographing the face of the walker M, from a point C to a point B in the example shown in FIG. 1) is called photographing target area.

The display unit 12 is constituted of, for example, a liquid crystal display. The display unit 12 displays various guides to the walker M. For example, the display unit 12 displays a guide for the walker M to direct his or her face to the photographing unit 11 or an authentication result about the face image. Further, the display unit 12 may display an operation guide at the time of face image registration.

The passage control unit 13 controls a passage of the walker M. The passage control unit 13 is configured to control the passage of the walker M by controlling the opening/closing of a door or gate (not shown). The passage control unit 13 controls the passage of the walker M based on a result of the face authentication by the face authentication apparatus 1.

The input unit 14 performs an operation of switching over the operating mode of each unit in the face authentication system and inputs identification information for specifying a person at the time of registration or authentication. The input unit 14 is constituted of, for example, a ten key, keyboard or a touch panel. The input unit 14 may be provided in the vicinity of the photographing unit 11 or the display unit 12, or formed integrally with the photographing unit 11 or the display unit 12.

That is, in the face authentication system shown in FIG. 1, for example, a face of a person (walker) M walking toward the passage control unit 13 is photographed by the photographing unit 11 in an interval between the point C and the point B. The face authentication apparatus 1 collates a face image extracted from images taken by the photographing unit 11 with face images of persons registered previously in an interval from the point B to a point A. The face authentication apparatus 1 authenticates whether or not the walker is a registered person based on a result of the collation on the face images. The face authentication apparatus 1 outputs the aforementioned authentication result to the display unit 12 or the passage control unit 13.

Consequently, the display unit 12 displays a result of the authentication by the face authentication apparatus 1. The passage control unit 13 permits the walker M to pass if the face authentication apparatus 1 determines that the walker M is a registered person and if it is determined that the walker M is not a registered person by the face authentication apparatus 1, the passage control unit 13 does not permit the passage of the walker M. Therefore, when the walker M reaches just before the passage control unit 13 from the point C in the face authentication system, an authentication result to the walker M is displayed on the display unit 12, so as to execute passage control by the passage control unit 13 based on the authentication result.

Next, the first embodiment will be described.

FIG. 2 is a diagram showing an example of the configuration of a face authentication apparatus 1A according to the first embodiment.

As shown in FIG. 2, the face authentication apparatus 1A includes a high tone image acquiring section 101, a face detecting section 102, a tone converting section 103, a face characteristic extracting section 104, a face registration information storage section 105, a face collation section 106, an authentication control section 107, an input section 108 and an output section 109. If the face authentication apparatus 1A is applied to the face authentication system shown in FIG. 1, it is connected to the photographing unit 11, the display unit 12, the passage control unit 13 and the input unit 14.

The high tone image acquiring section 101 is an interface for acquiring a high tone image taken by the photographing unit 11. That is, the high tone image acquiring section 101 collects high tone image data including the face of the walking person (walker) M taken by the photographing unit 11 successively. For example, the high tone image acquiring section 101 collects high tone digital gray image data of plural pieces consecutive, each piece consisting of 512 pixels horizontally and 512 pixels vertically. Further, the high tone image acquiring section 101 outputs collected image data to the face detecting section 102 and the tone converting section 103.

The face detecting section 102 executes a processing of detecting a candidate area (face area) in which a face exists from images acquired by the high tone image acquiring section 101. The face detecting section 102 outputs information indicating the detected face area to the tone converting section 103 and the face characteristic extracting section 104. As the face detecting section 102, a variety of means for detecting the face area are available. The face detecting section 102 may adopt a method described in a document 1 ("Proposal of a Space Difference Probability Template suitable for Authentication of Images containing Minute Differences" by MITA, KANEKO and HORI, Bulletin of the 9^{th} Image Sensing Symposium Lectures, SSII03. 2003). According to the method described in the above document 1, dictionary patterns for detection are created from face learning patterns and a pattern having a high similarity with respect to the dictionary patterns is searched for as the face area from inputted images.

The tone converting section 103 executes a processing of converting a high tone image acquired from the high tone image acquiring section 101 to a low tone image. The tone converting section 103 converts a high tone image acquired by the high tone image acquiring section 101 to a low tone image suitable for an extraction processing for the face characteristic information by the face characteristic extracting section 104 described later and a collation processing by the face collation section 106. Here, for example, it is assumed that the high tone image is higher-bit image data than 8 bits outputted by the A/D converter (for example, 12 bits) and the low tone image is image data of 8 bits or lower (for example, 8 bits).

Particularly, the purpose of the tone converting section 103 is not to convert the high tone image to the low tone image by a bit shift, but to correct the tone so that characteristics of a desired image area (face area) taken by the photographing unit 11 appear clearly. For example, the tone converting section 103 sets a face area detected by the face detecting section 102 from t^{th} image data which is a converting target of plural image data acquired by the high tone image acquiring section 101 as a processing target area. The tone converting section 103 carries out tone conversion to such a set processing target area so that an upper limit value and lower limit value of brightness distribution in the processing target area of the high tone image become a maximum value and minimum value of the entire low tone image. An example of the tone conversion processing by the tone converting section 103 will be described in detail later.

The face characteristic extracting section 104 extracts face characteristic information which is a characteristic amount of the face from a face area detected by the face detecting section 102. That is, the face characteristic extracting section 104 extracts the face characteristic information from images of the face area detected by the face detecting section 102 of images converted to low tone by the tone converting section 103. For example, the face characteristic extracting section 104 cuts out an area of a specified size and shape from an image of the face area converted to the low tone with reference to the characteristic points of the face and uses its gray information as a characteristic amount (face characteristic information). The face characteristic extracting section 104 outputs calculated face characteristic information to the authentication control section 107.

Here, gray values of a m-pixel x n-pixel are used as information and information of dimension m x n is regarded as characteristic vector. A correlation matrix of these characteristic vectors is obtained and an orthonormal vector by K-L expansion is obtained so as to calculate a partial space. In the meantime, the partial space is calculated by obtaining a correlation vector (or covariance matrix) of the characteristic vector and obtaining an orthonormal vector (eigenvector) by its K-L expansion. Here, k eigenvectors corresponding to eigenvalue are selected in descending order of the eigenvalue so as to express the partial space using a eigenvector assembly.

The face characteristic extracting section 104 obtains a correlation matrix Cd from the characteristic vector and obtains a matrix Φ of the eigenvector by diagonalization with Cd = Φd Ad Φd T. This partial space is used as face characteristic information for collation of the face image. In the meantime, the face characteristic information of registered persons are obtained from the registered persons and registered as a dictionary. Further, the partial space may be used as the face characteristic information for identification.

The face registration information storage section 105 stores the face image or face characteristic information of a registered person. For example, the face registration information storage section 105 stores information (face registration information) of the registered person which correlates the face image or face characteristic information obtained from an image taken by the photographing unit 11 as a registration processing by the authentication control section 107 and the identification information inputted by the input unit 14. That is, the face registration information storage section 105 stores the face image or the face characteristic information of a registered person from which the similarity to the face characteristic amount of a walker is calculated in the authentication processing with the face image. The face registration information storage section 105 outputs to the face collation section 106 as required.

The face collation section 106 executes a processing of collating the face image of a walker with the face images of registered persons. The face collation section 106 calculates the similarity between the face characteristic information of the walker and the face characteristic information of the registered person and outputs its calculation result to the authentication control section 107. That is, various kinds of methods can be applied to the face collation processing of the face collation section 106 and the similarity to the face characteristic information of the walker M which is a recognizing target person is calculated with the face registration information recorded in the face registration information storage section 105 used as a dictionary pattern. This method can be achieved by using a mutual partial space method described in document 2 ("Face Recognition System using Moving Images" by YAMAGUCHI, FUKUI and MAEDA, SHINGAKU-GIHO PRMU97-50. pp. 17-23, 1997-06).

The authentication control section 107 controls the entire face authentication apparatus 1A. For example, the authentication control section 107 executes a processing of switching between a registration processing (registration processing mode) of recording the face registration information in the face registration information recording section 105 and a collation processing (collation processing mode) of collating the face characteristic information of a walker with the face registration information recorded in the face registration information recording section 105. Under the registration processing mode, the authentication control section 107 generates the face characteristic information obtained by the face characteristic extracting section 104 and the face registration information correlated with the identification information corresponding to the face characteristic information obtained by the input section 108, and records these pieces of information in the face registration information recording section 105.

That is, under the registration processing mode, the face characteristic information of a registered person is registered (recorded) in the face registration information recording section 105 as a dictionary pattern under the control of the authentication control section 107. Under a collation processing mode, the authentication control section 107 outputs the face characteristic information of a walker obtained from the face characteristic extracting section 104 to the face collation section 106 and makes the face collation section 106 collate the face characteristic information of the walker with each face registration information (dictionary pattern) recorded in the face registration information recording section 105. The authentication control section 107 acquires the similarity between the face characteristic information of the walker and each dictionary pattern as a collation result from the face collation section 106. The authentication control section 107 determines whether or not the walker is a registered person according to a similarity obtained as such a collation result and outputs its determination result to the output section 109. For example, if a maximum similarity is equal to or over a predetermined threshold, it is determined that the walker is a registered person having the maximum similarity and if the maximum similarity is below the predetermined threshold, it is determined that the walker is no registered person.

The input section 108 is an interface for obtaining information inputted from the input unit 14. The input section 108 outputs input information from the walker M inputted by the input unit 14 to the authentication control section 107. For example, the input section 108 acquires a change-over instruction for the operating mode such as the registration processing mode or collation processing mode inputted by the input unit or information such as identification information (ID information) for specifying the person inputted by the input unit 14 and supplies it to the authentication control section 107.

The output section 109 is an interface for outputting output information obtained by the authentication control section 107 to the display unit 12 or the passage control unit 13. In the collation processing mode, the output section 109 outputs an authentication result to a walker obtained by the authentication control section 107 to the display unit 12 and the passage control unit 13. In this case, the output section 109 outputs an authentication result and display information indicating a guide to a walker based on the authentication result to the display unit 12 and then outputs information indicating whether or not the walker is any registered person or information indicating whether or not passage of the walker M is permitted to the passage control unit.

Next, the tone conversion processing by the tone converting section 103 will be described.

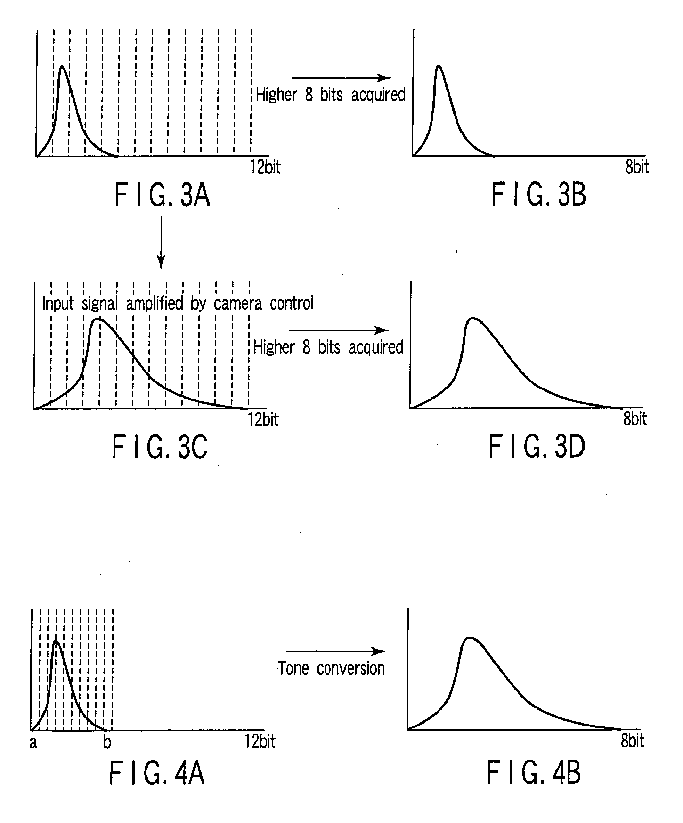

FIGS. 3A, 3B, 3C and 3D are diagrams for explaining examples of tone conversion processing by an ordinary bit shift. FIG. 3A is a diagram showing an example of a high tone image of 12 bits. FIG. 3B is an example of a low tone image of 8 bits obtained from the high tone image shown in FIG. 3A. FIG. 3C is an example of a high tone image of 12 bits obtained by signal amplification processing. FIG. 3D is a diagram showing an example of the low tone image obtained from the high tone image shown in FIG. 3C.

Generally, as the method for conversion from the high tone image to the low resolution image, a method of executing tone conversion by bit shift is available. In the tone conversion processing by bit shift, the high tone image of 12 bits shown in FIG. 3A is converted to the low tone image of 8 bits as shown in FIG. 3B. That is, as evident from FIGS. 3A and 3B, the brightness of a specific area or entire image is not changed in the tone conversion processing by bit shift. Generally, to change the brightness of the specific area in an image taken by the photographing unit 11, as shown in FIG. 3C, the signal of an image taken by the photographing unit 11 is amplified. However, for amplification of the image signal, its area cannot be specified. Thus, the signal of the entire image taken by the photographing unit 11 is amplified. If the high tone image as shown in FIG. 3C is obtained, a low tone image as shown in FIG. 3D is obtained by tone conversion by bit shift.

However, to execute signal amplification for converting the image shown in FIG. 3A to the image shown in FIG. 3C, a parameter which should be amplified needs to be specified from an already taken image (previous image). That is, to correct the brightness by amplifying part of the taken image signal, it is necessary to estimate information for correction of the brightness from a previously taken image. This indicates that optimum correction cannot be always executed to a rapid change in photographing environment such as an artificial photographing environment.

Corresponding to the tone conversion by bit shift, the tone converting section 103 corrects the tone so that the characteristic of a desired image area (face area) of a high tone image appears clearly, so as to correct the brightness. Hereinafter, an example of the tone correction processing applied to the tone converting section 103 will be described.

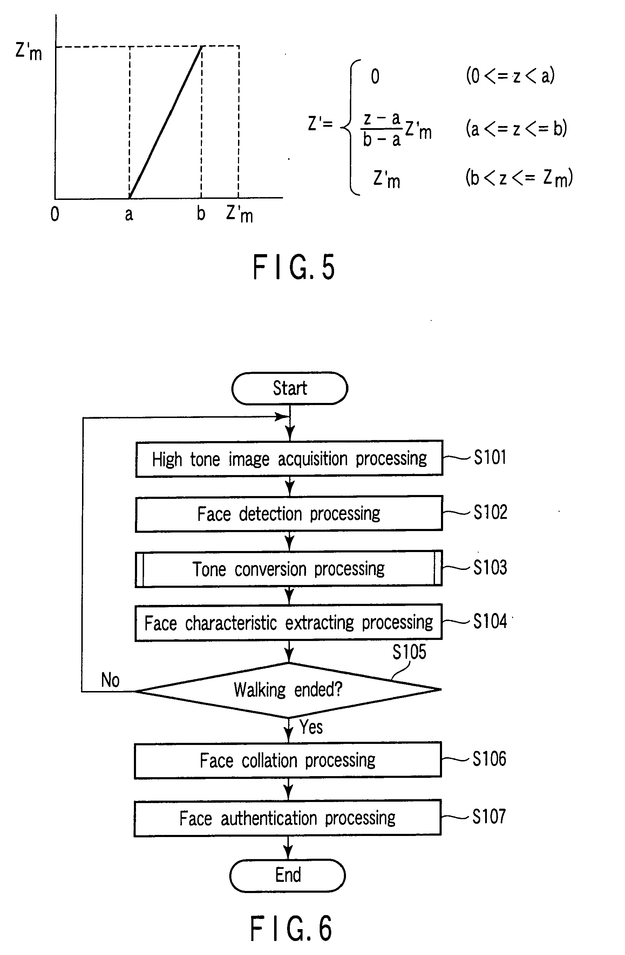

FIGS. 4A and 4B are diagrams for explaining an example of the tone conversion processing applied to the tone converting section 103. FIG. 4A shows an example of a high tone image of 12 bits. FIG. 4B shows an example of a low tone image of 8 bits which is a result of the tone conversion of the high tone image shown in FIG. 4A by the tone converting section 103. Further, FIG. 5 is a diagram showing an example of a function for the tone conversion processing applied to the tone converting section 103.

In the high tone image shown in FIG. 4A, the brightness distribution is concentrated between the point a and the point b. The high tone image having such a brightness distribution is preferred to be corrected in terms of brightness so as to expand the brightness distribution from the point a to the point b. Assuming that the brightness distribution shown in FIG. 4A originates from the image of a human face area, it can be considered that the feature of the face can be extracted easily by executing the above-mentioned brightness correction. Therefore, the tone converting section 103 determines the upper limit value a and the lower limit value b of the high tone image and executes tone conversion processing of mapping values from the point a to the point b to the maximum value and minimum value of the low tone image. By the tone changing processing, the high tone image shown in FIG. 4A is converted to the low tone image shown in FIG. 4B.

The upper limit value a and lower limit value b can be determined by taking into account not only the brightness value in the brightness distribution (for example, average of the brightness value) but also a contrast expressed by a spreading of the distribution (that is, dispersion of the brightness distribution). That is, the upper limit value and a lower limit value b are set to values which take into account not only the total value of the brightness value of an entire image but also the spreading of the distribution of the brightness value. By executing the tone conversion processing of mapping the upper limit value a and lower limit value b to the maximum value and minimum value, respectively, a high tone image in a specific area (face area) can be converted to a low tone image suitable for the collation processing.

The above-mentioned tone conversion processing is achieved based on a primary expression in which the upper limit value a and the lower limit value b in the high tone image become a maximum value Z'n and a minimum value 0, respectively, of the low tone image. Not only the primary expression shown in FIG. 5 but also any function which converts the upper limit value a and the lower limit value b in the high tone image to the maximum value Z'n and the minimum value 0, respectively, in the low tone image can be applied to the tone conversion processing.

That is, the tone converting section 103 acquires t-th high tone image data which is a conversion target of plural image data obtained by the high tone image acquiring section 101 and face area information obtained from the face detecting section 102 corresponding to the image. Consequently, the tone converting section 103 sets up the face area in high tone image data as a processing target area. After the processing target area is set up, the tone converting section 103 determines the upper limit value a and lower limit value b for the tone conversion based on the brightness distribution in the processing target area. The tone converting section 103 executes tone conversion processing of turning the upper limit value a and the lower limit value b to the maximum value Z'n and the minimum value 0, respectively, of the low tone image according to a predetermined function (for example, primary expression as shown in FIG. 5). Consequently, the image of the face area which is a processing target is converted to a low tone image whose brightness is corrected.

Next, the flow of the authentication processing (face authentication processing) with a face image in the face authentication apparatus 1A will be described.

FIG. 6 is a flow chart for explaining the flow of the face authentication processing in the face authentication apparatus 1A according to the first embodiment.

When the walker M invades into a point C under the system configuration shown in FIG. 1, the photographing unit 11 takes images including the face of the walker at a high tone until the walker M reaches the point B (while the walker M exists in a photographing object area). High tone images taken by the photographing unit 11 are supplied to the face authentication apparatus 1A successively.

That is, while the walker M exists in a photographing target area, the face authentication apparatus 1A acquires high tone images from the photographing unit 11 by means of the high tone image acquiring section 101 successively (step S101). The high tone image acquiring section 101 outputs a high tone image obtained from the photographing unit 11 to the face detecting section 102 and the tone converting section 103. The face detecting section 102 to be supplied with high tone images from the high tone image acquiring section 101 detects an area which looks like a human face area from the high tone image (step S102). The face detecting section 102 outputs information indicating a detected face area to the tone converting section 103 and the face characteristic extracting section 104. The tone converting section 103 executes tone conversion processing to high tone images given from the high tone image acquiring section 101 (step S103).

That is, the tone converting section 103 generates a brightness distribution in the high tone image of the face area with the high tone image given from the high tone image acquiring section 101 and information indicating the face area in the high tone image given from the face detecting section 102. When the brightness distribution of the face area is generated, the tone converting section 103 determines the upper limit value a and the lower limit value b of the high tone image for use in the tone conversion processing from the condition of the brightness distribution as described above. If the upper limit value a and the lower limit value b of the high tone image are determined, the tone converting section 103 executes the tone conversion processing so that the upper limit value a and the lower limit value b of the high tone image become the maximum value Z'n and the minimum value 0, respectively, of the low tone image. Consequently, the tone converting section 103 obtains a low tone image by correcting the brightness of an image of the face area in the obtained high tone image.

An image obtained by the above-described tone conversion processing is supplied to the face characteristic extracting section 104. The face characteristic extracting section 104 executes a processing of extracting the face characteristic information from a face area detected by the face detecting section 102 of images converted to the low tone by the tone converting section 103 (step S104).

The processing of the above-described steps S101 to S104 is executed repeatedly while the photographing unit 11 takes images of the walker M (step S105, NO). That is, if the walker M crosses over the point B from the point C (step S105, YES), the authentication control section 107 of the face authentication apparatus 1A terminates acquisition processing for the high tone images of the face of the walker M and proceeds to face collation processing by the face collation section 106 (step S106). In the meantime, if a high tone image of a predetermined number of frames is acquired or if the high tone images from which the face area can be detected reach a predetermined number, the authentication control section 107 may terminate the processing of the above steps S101 to S104 and proceed to step S106 and following steps.

That is, if the acquisition of the high tone images which takes the face of the walker is terminated, the authentication control section 107 supplies face characteristic information extracted by the face characteristic extracting section 104 to the face collation section 106 when the collation processing mode is selected and makes the face registration information storage section 105 execute a collation processing with the face characteristic information of registered persons. In the meantime, the face collation processing by the face collation section 106 may be implemented each time the face characteristic information is extracted in step S104.

When the face collation section 106 is supplied with the face characteristic information of the walker M by the authentication control section 107, it executes a face collation processing of calculating the similarity of the face characteristic information of each registered person recorded in the face registration information recording section 105 with respect to the face characteristic information of the walker M (step S106). A result of this face collation processing is supplied from the face collation section 106 to the authentication control section 107. Consequently, the authentication control section 107 executes an authentication processing of determining whether or not the walker M is a registered person based on a result of the face collation processing by the face collation section 106 (step S107).

For example, the authentication control section 107, supplied with a result of the face collation processing from the face collation section 106, determines whether or not the maximum similarity is a predetermined threshold or more (threshold for determining that the walker is a real person). If the maximum similarity is the predetermined threshold or more as a result of this determination, the authentication control section 107 authenticates that the walker M is a registered person having the maximum similarity. If the maximum similarity is less than the predetermined value as a result of the above determination, the authentication control section 107 authenticates that the walker M is not any registered person.

The above authentication result is supplied from the authentication control section 107 to the display unit 12 and the passage control unit 13 through the output section 109. Consequently, an authentication result is displayed on the display unit 12 and the passage control unit 13 implements a passage control to the walker based on the authentication result.

When the registration processing mode is selected, the authentication control section 107 executes a processing of recording the face characteristic information extracted in step S104 in the face registration information recording section 105 as face characteristic information correlated with identification information (for example, identification information inputted from the input unit 14 through the input section 108) given to the walker (registered person) instead of the above-mentioned steps S106 and S107.

As described above, the face authentication apparatus 1A of the first embodiment acquires high tone images including the face of a walker, converts a high tone image to a low tone image by the tone conversion processing so that the brightness of the face area of the acquired high tone image is optimum and executes an extraction processing for the face characteristic information and face collation processing based on the low tone images whose brightness is optimized.

Consequently, the face authentication apparatus 1A can acquire a stable face image in real time even if the lighting condition is largely different or the photographing environment such as the lighting condition is changed while the walker is walking in a photographing target area. As a result, the face authentication apparatus 1A can implement the authentication processing with high precision face images.

Next, the second embodiment will be described.

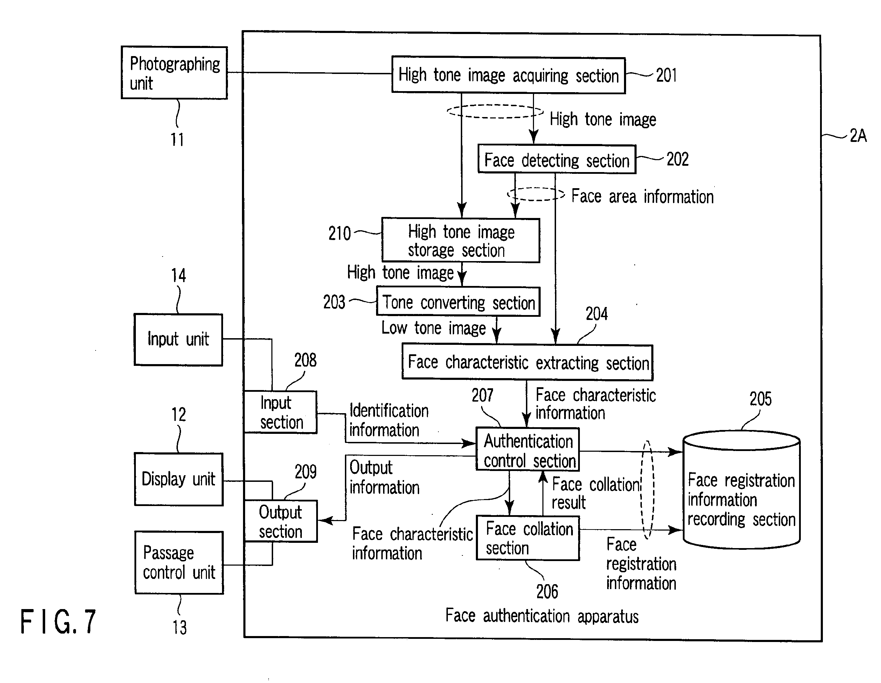

FIG. 7 is a diagram showing a configuration example of a face authentication apparatus 1B according to the second embodiment.

As shown in FIG. 7, the face authentication apparatus 1B includes a high tone image acquiring section 201, a face detecting section 202, a high tone image storage section 210, a tone converting section 203, a face characteristic extracting section 204, a face registration information recording section 205, a face collation section 206, an authentication control section 207, an input section 208 and an output section 209. As for the operating condition of the face authentication apparatus 1B, it is estimated that the face authentication apparatus 1B is applied to the face authentication system shown in FIG. 1. In this case, it is assumed that the photographing unit 11, display unit 12, passage control unit 13 and input unit 14 as shown in FIG. 1 are connected to the face authentication apparatus 1B.

The face authentication apparatus 1B shown in FIG. 7 is constructed by attaching the high tone image storage section 210 to the face authentication apparatus 1A shown in FIG. 2 described in the first embodiment. As for the processing content of each section, the processing content in the tone converting section 203 of the face authentication apparatus 1B is different from the processing content in the tone converting section 103 of the face authentication apparatus 1A. That is, in the face authentication apparatus 1B shown in FIG. 7, the high tone image acquiring section 201, the face detecting section 202, the face characteristic extracting section 204, the face registration information recording section 205, the face collation section 206, the authentication control section 207, the input section 208 and the output section 209 have functions to execute the same processings as those of the high tone image acquiring section 101, the face detecting section 102, the face characteristic extracting section 104, the face registration information recording section 105, the face collation section 106, the authentication control section 107, the input section 108 and the output section 109 in the face authentication apparatus 1A described in the first embodiment. Thus, detailed description of each section other than the high tone image storage section 210 and the tone converting section 203 in the face authentication apparatus 1B is omitted.

The high tone image storage section 210 stores a plurality of the high tone images (high tone image column) obtained consecutively by the high tone image acquiring section 201 and information indicating the face area with respect to each high tone image obtained by the face detecting section 202 with a correlation between them. The high tone image storage section 210 stores images of the face area of such consecutively obtained high tone images as the face image column for each walker. If plural walkers are detected from an identical image at the same time, the face image of each walker is stored in each different area.

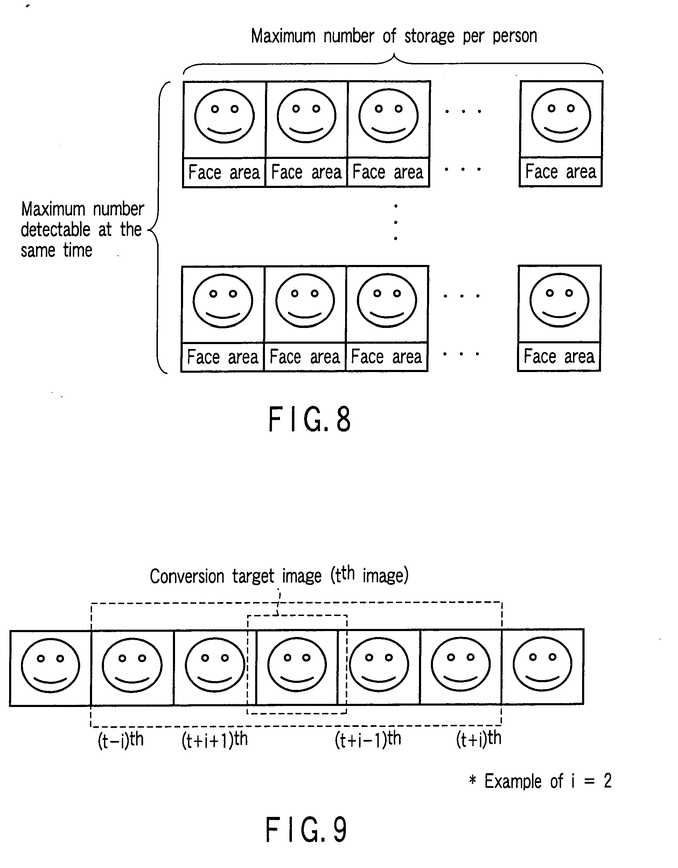

FIG. 8 is a diagram showing a configuration example of the storage area for storing the image column of each walker in the high tone image storage section 210. As shown in FIG. 8, the image column (high tone face image column of each walker) of the face area detected from the high tone images acquired from each walker is stored in the high tone image storage section 210.

The tone converting section 203 executes tone conversion processing to a plurality of the high tone images (high tone face image column) stored in the high tone image storage section 210. The setting method for a processing target area is the same as the method described in the first embodiment. That is, the tone converting section 203 sets the face area of each high tone image as a processing target area. The same tone conversion processing as the tone converting section 103 described in the first embodiment can be applied to the tone conversion method in the tone converting section 203. For example, a tone conversion processing based on the primary expression shown in FIG. 5 can be applied.

The tone converting section 203 is different from the tone converting section 103 in that the former uses face images before and after a face image which is a processing target. That is, the tone converting section 203 integrates plural face images before and after the face image which is a processing target and implements the tone conversion upon the integrated face images. As a method for integrating the plural images, for example, a method of selecting a representative value selected from plural images, a method of using a moving average, and a method of using a median value are available. In this way, the tone converting section 203 integrates an image which is a processing target and plural images before and after and then converts the tones of the integrated images so as to obtain low tone images. The low tone images obtained by the tone conversion processing are outputted from the tone converting section 103 to the face characteristic extracting section 204.

FIG. 9 shows an example of the face image column of a walker stored in the high tone image storage section 210. Assume that the tone converting section 203 regards an image obtained the t^{th} (t^{th} image) as a target for the tone conversion with respect to the high tone image column shown in FIG. 9. In this case, the tone converting section 203 uses not only the t^{th} image which is a target for the conversion but also images before and after that consecutive in time (up to t ± i). For example, when two images each located before and after are used (that is, i = 2), the tone converting section 203 executes a processing of integrating five high tone images of t-2, t-1, t, t+1, and t+2. After the integrated high tone image is obtained, the tone converting section 203 converts the tone of the integrated high tone images in the same method as the tone converting section 103. A low tone image obtained as a result is regarded as a result of the tone conversion processing to the t^{th} high tone image.

As described above, by executing the tone conversion processing using plural images consecutive in terms of time, the tone converting section 203 can maintain brightness changes during a walk so as to optimize detected face images thereby achieving a robust tone conversion processing with respect to a detection error of face characteristic information.

Next, a flow of the authentication processing (face authentication processing) with the face images in the face authentication apparatus 1B will be described.

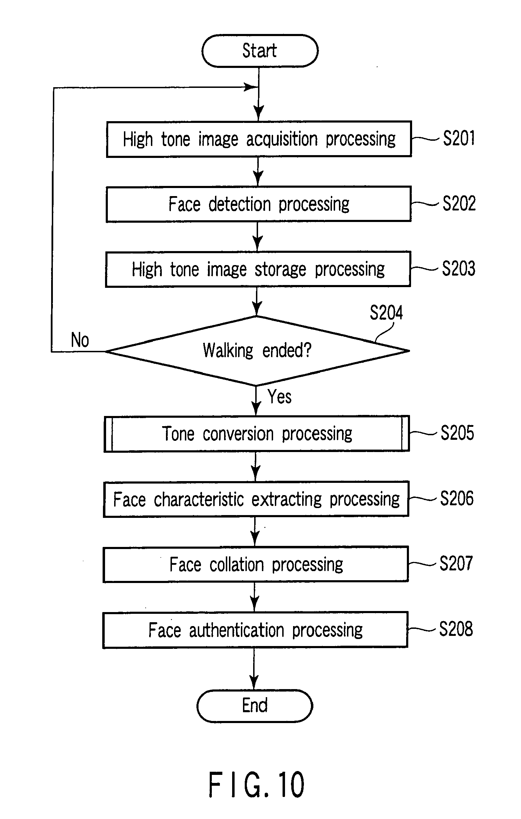

FIG. 10 is a flow chart for explaining a flow of authentication processing in the face authentication apparatus 1B of the second embodiment.

When the walker M invades into the point C in the system configuration shown in FIG. 1, the photographing unit 11 continuously takes images of the face of the walker until the walker M reaches the point B (while the walker M exists in a photographing target area) at a high tone. The high tone images taken by the photographing unit 11 are supplied to the face authentication apparatus 1B successively.

That is, while the walker M exists in the photographing target area, the high tone image acquiring section 201 of the face authentication apparatus 1B acquires the high tone images from the photographing unit 11 successively (step S201). The high tone image acquiring section 201 stores the high tone images acquired from the photographing unit 11 in the storage area of the high tone image storage section 210 and outputs to the face detecting section 202. The face detecting section 202, which is supplied with the high tone images from the high tone image acquiring section 201, detects an area which looks like a human face area from the high tone image (step S202). The face detecting section 202 outputs information indicating the detected face area to the high tone image storage section 210 and the face characteristic extracting section 204. The high tone image storage section 210 extracts an image in a face area of the high tone images (high tone face image) acquired from the high tone image acquiring section 201 based on a detection result for the face area by the face detecting section 202 and stores the extracted high tone face images as a face image column of the walker M (step S203).

The above-described processings of the steps S201 to S203 are executed repeatedly while the photographing unit 11 takes images of the walker M (step S204, NO). Consequently, the face images of the walker M in the plural high tone images taken by the photographing unit 11 are stored in the high tone image storage section 210 as an image column of the walker M. When the walker M crosses over the point B from the point C (step S204, YES), the authentication control section 107 of the face authentication apparatus 1B terminates the acquisition processing for the high tone images which take the face of the walker M and proceeds to tone conversion processing by the tone converting section 203 (step S205). In the meantime, if a high tone image having a predetermined number of frames is acquired or the high tone images from which the face area can be detected reach a predetermined number, it is permissible to terminate processings of the above steps S201 to S203 and proceed to step S205 and following steps.

If the storage of the image columns into the high tone image storage section 210 is terminated, the tone converting section 203 executes tone conversion processing on each image in the image column of the walker M using images before and after. That is, the tone converting section 103 integrates high tone images before and after each high tone image (high tone face image) in the image column of the walker M stored in the high tone image storage section 210 and implements the tone conversion processing on the integrated high tone images. In the tone conversion processing of this case, a brightness distribution of the integrated high tone image (face image) is generated and an upper limit value a and a lower limit value b of the high tone image for use in the tone conversion processing are determined from the status of the generated brightness distribution. If the upper limit value a and the lower limit value b of the high tone image are determined, the tone converting section 203 executes such a tone conversion processing that the upper limit value a and the lower limit value b of the high tone image become a maximum value Z'n and a minimum value 0, respectively, in the low tone image. Consequently, the tone converting section 203 obtains a low tone image by correcting the brightness of the high tone image (high tone face image), which is a processing target.

The low tone image obtained by the tone conversion processing is supplied to the face characteristic extracting section 204. The face characteristic extracting section 204 executes a processing of extracting the face characteristic information from the low tone image obtained by the tone converting section 203 (step S206). The face characteristic information extracted by the face characteristic extracting section 204 is supplied to the authentication control section 207 as the face characteristic information of the walker M. When the collation processing mode is selected, the authentication control section 207 supplies the face characteristic information extracted by the face characteristic extracting section 204 to the face collation section 206 and makes the face collation section 206 execute a collation processing with the face characteristic information of a registered person recorded in the face registration information recording section 205.

When the face collation section 206 is supplied with the face characteristic information of the walker M by the authentication control section 207, as a face collation processing, it executes a processing of calculating the similarity of the face characteristic information of each registered person recorded in the face registration information recording section 205 with respect to the face characteristic information of the walker M (step S207). A result of this face collation processing is supplied from the face collation section 206 to the authentication control section 207. As a result, the authentication control section 207 executes an authentication processing of determining whether or not the walker M is a registered person based on a result of the face collation processing by the face collation section 206 (step S207).

For example, the authentication control section 207, supplied with a result of the face collation processing from the face collation section 206, determines whether or not the maximum similarity is equal to or over a predetermined threshold (threshold for determining that the walker is a real person). If the maximum similarity is equal to or over the predetermined threshold as a result of this determination, the authentication control section 207 authenticates that the walker M is a registered person having the maximum similarity. If the maximum similarity is less than the predetermined value as a result of the above determination, the authentication control section 207 authenticates that the walker M is not any registered person.

The above authentication result is supplied from the authentication control section 207 to the display unit 12 and the passage control unit 13 through the output section 209. Consequently, an authentication result is displayed on the display unit 12 and the passage control unit 13 implements a passage control to the walker based on the authentication result.

When the registration processing mode is selected, the authentication control section 207 executes a processing of recording the face characteristic information extracted in step S206 in the face registration information recording section 205 as face characteristic information correlated with identification information (for example, identification information inputted from the input unit 14 through the input section 208) given to the walker (registered person) instead of the above-mentioned steps S207 and S208.

As described above, the face authentication apparatus 1B of the second embodiment acquires a plurality of the high tone images consecutive in terms of time and stores images of the face area in acquired each high tone image in the high tone image storage section 210 as a face image column of the walker M. Then, the face authentication apparatus 1B integrates face images before and after each high tone face image stored in the high tone image storage section 210 and executes the tone conversion so that the brightness of the face image is optimum. Then, it executes an extraction processing for the face characteristic information and face collation processing based on the low tone images whose brightness is optimized.

Consequently, the face authentication apparatus 1B can acquire a stable face image in real time using a plurality of images consecutive in terms of time, even if the lighting condition is largely different or the photographing environment such as the lighting condition is changed while the walker is walking in a photographing target area. As a result, the face authentication apparatus 1A can implement the authentication processing with high precision face images.

Next, a third embodiment will be described.

The third embodiment described later can be applied to both the face authentication apparatus 1A described in the first embodiment and the face authentication apparatus 1B described in the second embodiment. Here, it is assumed that the third embodiment is applied to the face authentication apparatus 1B described in the second embodiment.

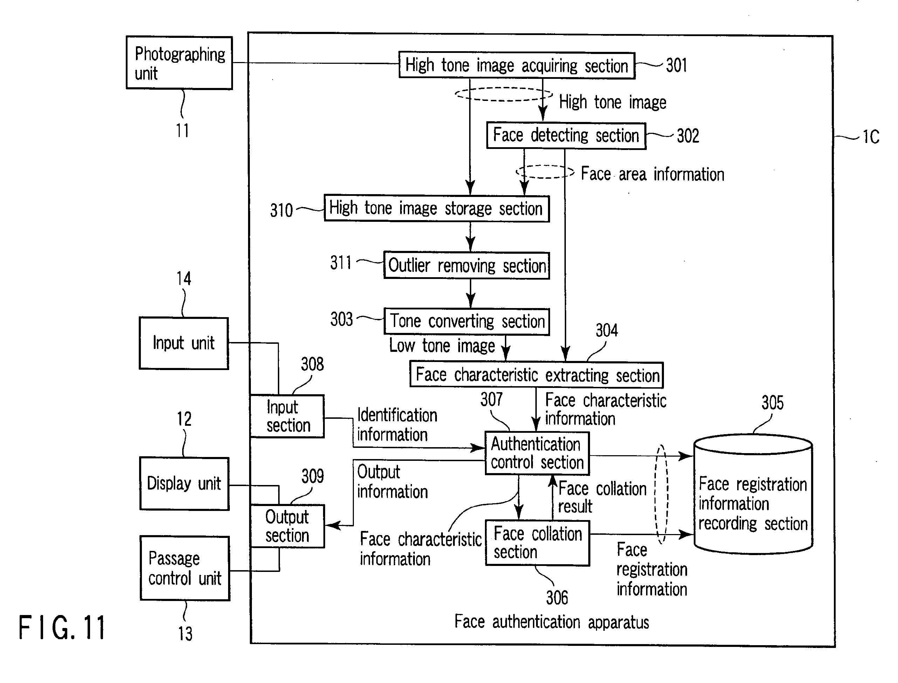

FIG. 11 is a diagram showing a configuration example of a face authentication apparatus 1C of the third embodiment.

As shown in FIG. 11, the face authentication apparatus 1C includes a high tone image acquiring section 301, a face detecting section 302, a high tone image storage section 310, an outlier removing section 311, a tone converting section 303, a face characteristic extracting section 304, a face registration information storage section 305, a face collation section 306, an authentication control section 307, an input section 308, and an output section 309. As for the operating condition of the face authentication apparatus 1C, it is estimated that it is applied to the face authentication system shown in FIG. 1. In this case, the photographing unit 11, the display unit 12, the passage control unit 13 and the input unit 14 as shown in FIG. 1 are connected to the face authentication apparatus 1C.

In the meantime, the face authentication apparatus 1C shown in FIG. 11 is constructed by attaching the outlier removing section 311 to the face authentication apparatus 1B shown in FIG. 7 described in the second embodiment. That is, in the face authentication apparatus 1C shown in FIG. 11, the high tone image acquiring section 301, the face detecting section 302, the high tone image storage section 310, the tone converting section 303, the face characteristic extracting section 304, the face registration information recording section 305, the face collation section 206, the authentication control section 307, the input section 308 and the output section 309 have functions to execute the same processings as those of the high tone image acquiring section 201, the face detecting section 202, the high tone image storage section 210, the tone converting section 203, the face characteristic extracting section 204, the face registration information recording section 205, the face collation section 206, the authentication control section 207, the input section 208 and the output section 209 in the face authentication apparatus 1B described in the second embodiment. Thus, detailed description of each section other than the outlier removing section 311 in the face authentication apparatus 1C is omitted.

In the brightness distribution of the face area image (face image), the outlier removing section 311 executes a processing of removing brightness values remarkably off an appropriate brightness distribution as the face image. As a method for determining whether or not a brightness value is off the appropriate brightness distribution in the face image, it is possible to apply a method in which a properly instructed average brightness distribution of the face area is held so as to compare that value therewith and a method in which an inputted brightness distribution of the face area is assumed to be a normal distribution and an outlier is obtained according to an average value and standard deviation of a histogram.

Further, information indicating the brightness distribution of the face image from which the outlier is removed by the outlier removing section 311 is outputted to the tone converting section 303. Consequently, the tone converting section 303 can determine the upper limit value a and the lower limit value b based on the brightness distribution in the face image from which the outlier is removed. As a result, the tone converting section 303 can execute the same tone conversion as the tone converting section 203 described in the second embodiment and the tone converting section 103 described in the first embodiment while removing the outlier.

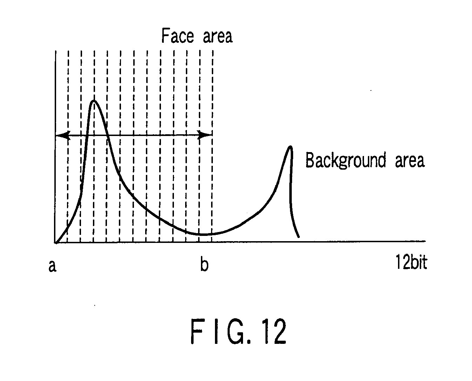

FIG. 12 is a diagram showing the brightness distribution of an image containing the brightness distribution of a face area determined to be an appropriate brightness distribution and the brightness distribution of a background area determined to be an outlier. Generally, it is considered that the face area and the background area have different features in the brightness distribution. That is, the brightness distribution in the face area and the brightness distribution in the background area have different peak values as shown in FIG. 12. Thus, if the appropriate brightness distribution of the face area or the brightness distribution of the background area can be distinguished, a processing of removing the brightness distribution of the background area as an outlier is possible. In the example shown in FIG. 12, if the brightness distribution between the point a and the point b is determined to be a brightness distribution of the face area and then, tone conversion processing is executed with the upper limit value and the lower limit value as point a and point b, the brightness distribution of the background area is excluded.

In the face authentication processing in the face authentication apparatus 1C having the outlier removing section 311, a outlier removing processing by the aforementioned outlier removing section 311 is executed just before the tone conversion processing of step S205 in the face authentication processing of the face authentication apparatus 1B shown in FIG. 10. If the outlier removing section 311 is applied to the face authentication apparatus 1A of the first embodiment, in the face authentication processing, the outlier removing processing by the outlier removing section 311 is executed just before the tone conversion processing of step S103 in the face authentication processing of the face authentication apparatus 1A shown in FIG. 6.

As described above, in the face authentication apparatus of the third embodiment, the brightness values of the background area remarkably off the brightness distribution of the face area are excluded and parameters for the tone conversion processing are determined based on an appropriate brightness distribution as the brightness distribution of the face area. Then, the tone conversion is executed according to those parameters so that the brightness of the face area is optimum and the extraction processing and face collation processing for the face characteristic information are carried out based on the low tone face images whose brightness is optimized. Consequently, the face authentication apparatus of the third embodiment can acquire, in real time, stable face images excluding the brightness distribution of the background area other than the face area even if the detection accuracy of the face area is poor.

## Claims

1. A person authentication apparatus (1A, 1B, 1C) **characterized by** comprising:
an acquiring section (101, 201, 301) which acquires a high tone image including a face of a walking person;
a face detecting section (102, 202, 302) which detects a face area of the high tone image acquired by the acquiring section;
a tone converting section (103, 203, 303) which converts the high tone image to a low tone image in accordance with the brightness distribution of the face area detected by the face detecting section;
a characteristic extracting section (104, 204, 304) which extracts face characteristic information from the face area of the low tone image obtained by the tone converting section; and
an authentication section (106-107, 206-207, 306-307) which authenticates whether or not the walking person is a registered person by collating the face characteristic information extracted by the characteristic extracting section with the face characteristic information of the registered person.

2. The person authentication apparatus according to claim 1, **characterized in that** the tone converting section (103, 203, 303) determines an upper limit value and a lower limit value in the brightness distribution of the face area detected by the face detecting section and executes tone conversion so that the upper limit value and the lower limit value become a maximum value and minimum value, respectively, of the low tone image after the conversion.

3. The person authentication apparatus according to claim 2, **characterized in that** the tone converting section (103, 203, 303) executes the tone conversion based on a primary expression so that the upper limit value and the lower limit value are converted to the maximum value and minimum value, respectively, of the low tone image after the conversion.

4. The person authentication apparatus according to any one of claims 1 to 3, **characterized by** further comprising:
a removing section (311) which determines a brightness value of an area other than the face from the brightness distribution of the face area detected by the face detecting section, and generates a brightness distribution from which the brightness value determined to be that of the area other than the face is removed,
wherein the tone converting section (103, 203, 303) executes the tone conversion based on the brightness distribution from which the brightness value of the other area than the face is removed by the removing section.

5. The person authentication apparatus (1B, 1C) according to claim 1, **characterized by** further comprising:
a storage section (210, 310) which stores the high tone images of the face area detected by the face detecting section as an image column in an acquisition order of the high tone images by the acquiring section,
wherein the acquiring section (201, 301) obtains a plurality of the high tone images containing the face of the walking person consecutively, and
the tone converting section (203, 303) integrates a specific high tone image in an image column stored in the storage section with the high tone images before and after and converts the integrated high tone image to a low tone image in accordance with the brightness distribution of the integrated high tone image.

6. The person authentication apparatus (1B, 1C) according to claim 5, **characterized in that** the tone converting section (203, 303) determines the upper limit value and the lower limit value of the brightness distribution of the integrated high tone image and executes the tone conversion so that the upper limit value and the lower limit value become a maximum value and a minimum value, respectively, of the low tone image after the conversion.

7. The person authentication apparatus (1B, 1C) according to claim 6, **characterized in that** the tone converting section (203, 303) executes the tone conversion based on a primary expression so that the upper limit value and the lower limit value are converted to the maximum value and the minimum value, respectively, of the low tone image after the conversion.

8. The person authentication apparatus (1C) according to any one of claims 5 to 7, **characterized by** further comprising:
a removing section (311) which determines the brightness value of an area other than the face from the brightness distribution of the integrated high tone image and generates a brightness distribution excluding the brightness value determined to be that of the other area than the face,
wherein the tone converting section (303) executes the tone conversion based on the brightness distribution from which the brightness value of the other area than the face is excluded by the removing section.

9. A person authentication method for use in a person authentication apparatus which authenticates whether or not a walking person is a registered person, **characterized by** comprising:
acquiring a high tone image including a face of the walking person (S101, S201);
detecting a face area of the acquired high tone image (S102, S202);
converting the high tone image to a low tone image in accordance with a brightness distribution of the detected face area (S103, S205);
extracting face characteristic information from the face area of the low tone image obtained by the tone conversion (S104, S206); and
authenticating whether or not the walking person is a registered person by collating the extracted face characteristic information with the face characteristic information of the registered person (S106-S107, S207-S208).

10. The person authentication method according to claim 9, **characterized in that** in the tone conversion (S103, S205), a brightness value of an area other than the face is determined from the brightness distribution in the detected face area, a brightness distribution is generated by excluding the brightness value determined to be that of the other area than the face, and the tone conversion is executed based on the brightness distribution from which the brightness of the other area than the face is excluded.

11. The person authentication method according to claim 9, **characterized by** further comprising:
acquiring a plurality of high tone images containing the face of a walking person consecutively (S201);
detecting the face areas in said plurality of acquired high tone images (S202); and
storing the high tone images of the detected each face area as an image column in an acquisition order of the high tone images (S203),
wherein in the tone conversion (S205), a specific high tone image in the image column stored in the storage section is integrated with high tone images before and after and the integrated high tone image is converted to a low tone image in accordance with the brightness distribution of the integrated high tone image.

12. The person authentication method according to claim 11, **characterized by** further comprising determining the brightness value of the other area than the face from the brightness distribution of the integrated high tone image and generating a brightness distribution excluding the brightness value determined to be that of the other area than the face (311),
wherein in the tone conversion (S103, S205), the tone conversion is executed based on the brightness distribution from which the brightness value of the other area than the face is excluded.
